# EUROPÄISCHE PATENTSCHRIFT

(11) **EP 2 739 883 B1**
(45) Veröffentlichungstag und Bekanntmachung des Hinweises auf die Patenterteilung: **02.09.2015**
(21) Anmeldenummer: 13703812.1
(22) Anmeldetag: 12.02.2013
(51) Int. Cl.: F16H 61/12, F16H 61/688, F16D 48/06, G07C 5/08

(54) **VERFAHREN UND STEUERGERÄT FÜR EINE ANTRIEBSSTRANG-KOMPONENTE**
METHOD AND CONTROL UNIT FOR A DRIVE TRAIN COMPONENT
PROCÉDÉ ET APPAREIL DE COMMANDE D'UN ÉLÉMENT D'UNE CHAÎNE CINÉMATIQUE

(30) Priorität: 15.02.2012 DE 102012003328
(43) Veröffentlichungstag der Anmeldung: 11.06.2014
(73) Patentinhaber: GETRAG Getriebe- und Zahnradfabrik Hermann Hagenmeyer GmbH & Cie KG, 74199 Untergruppenbach (DE)
(72) Erfinder: SEUFERT, Martin, 71711 Steinheim (DE); HETTICH, Ralf, 70794 Filderstadt (DE); KALISCH, Tobias, 78050 Villingen-Schwenningen (DE); LUDWIG, Michael, 74889 Reihen (DE); SOEHNER, Heiko, 74177 Bad Friedrichshall (DE)
(74) Vertreter: Witte, Weller & Partner Patentanwälte mbB
(86) Internationale Anmeldenummer: PCT/EP2013/052796
(87) Internationale Veröffentlichungsnummer: WO 2013/120857

(56) Entgegenhaltungen:
- EP-A2- 1 847 732
- WO-A1-2008/049606
- DE-A1-102006 054 253
- DE-B3-102004 018 962

## Beschreibung

Die vorliegende Erfindung betrifft ein Verfahren zum Ansteuern einer Komponente eines Antriebsstranges eines Kraftfahrzeuges, wobei die Komponente mechanisch in einen sicheren Zustand vorgespannt ist, und betrifft ferner ein Steuergerät zur Durchführung eines solchen Verfahrens.

Ein Verfahren gemäß dem Oberbegriff des Anspruchs 1 ist aus EP 1 847 732 A bekannt.

Auf dem Gebiet der Antriebsstränge für Kraftfahrzeuge besteht ein Trend, verstellbare Komponenten mittels elektronisch angesteuerter Aktuatoren zu betätigen. Die Komponenten können Bestandteil des Antriebsmotors sein (beispielsweise Drosselklappe), sind jedoch insbesondere Komponenten, die in Leistungsflussrichtung hinter dem Antriebsmotor angeordnet sind, wie Anfahrkupplungen, Getriebe, Differentiale, etc.

Die Aktuatoren können dabei fluidische oder elektromechanische Aktuatoren sein.

Da in Kraftfahrzeug-Antriebssträngen eine erhöhte Anforderung an die Sicherheit zu stellen ist, sind in der Regel Sicherheitssysteme vorgesehen, die bei dem Auftreten von Fehlern in der elektronischen Aktuierung die betroffene Komponente bzw. den Antriebsstrang in einen sicheren Zustand überführen sollen. Je nach Komponente ist es dabei sicherheitstechnisch erwünscht oder gefordert, die Komponente innerhalb einer Sicherheitszeitspanne (Prozesssicherheitszeit) in einen sicheren Zustand zu überführen. Wenn das Betätigen der Komponente beispielsweise zu Verspannungen in dem Antriebsstrang führen kann, kann durch das Überführen in einen sicheren Zustand verhindert werden, dass eine Haftung zwischen einem Antriebsrad und einer Fahrbahnoberfläche verlorengeht.

Ein sicherer Zustand kann dabei beispielsweise bedeuten, dass die Komponente geöffnet wird, so dass hierüber keine Antriebsleistung mehr übertragen werden kann. In manchen Fällen ist jedoch der sichere Zustand damit verbunden, eine Komponente zu schließen. Beispielsweise kann hierdurch in manchen Fällen ein Verlust an Zugkraft verhindert werden, was bei einem Überholvorgang gegebenenfalls sicherheitsproblematisch sein könnte (siehe zum Beispiel DE 10 2004 018 962 B3). Aus diesem Dokument ist es bekannt, bei Auftreten eines Fehlertyps in einem Doppelkupplungsgetriebe jene Kupplung, über die ein höheres Drehmoment übertragbar ist, geschlossen zu halten.

Das Dokument DE 10 2006 054 253 A1 schlägt vor, beim Auftreten eines Störungssignals zunächst beide Kupplungen eines Doppelkupplungsgetriebes zu öffnen und nach Erreichen eines sicheren Grundzustandes eine der beiden Kupplungen wieder mit Druck zu beaufschlagen. Gegebenenfalls wird in die Ansteuerung des Antriebsmotors eingegriffen.

Im Falle eines Prozessorfehlers wird ein Steuergerät zum Ansteuern der Komponente zurückgesetzt (Reset). Dies führt in der Regel zu einem Abschalten der Ausgänge des Steuergerätes. In einem solchen Fall wird der sichere Zustand durch die mechanische Vorspannung der Komponente erzielt. Aus dem Dokument WO 2008/049606 A1 ist es bekannt, unabhängig von dem Steuergerät eine Sicherheits-Hardware vorzusehen, die parallel zu dem Steuergerät mit einer Aktuatoranordnung verbunden und dazu ausgelegt ist, im Falle eines Fehlerzustandes die Aktuatoranordnung unabhängig von dem Steuergerät mit elektrischer Leistung zu versorgen, um eine Komponente in Form einer Trennkupplung in einen sicheren Zustand zu überführen (beispielsweise zu öffnen).

Sofern die Aktuatoranordnung einen Elektromotor aufweist, muss die mechanische Vorspannung in einem Fehlerfall den Elektromotor folglich nicht mitschleppen. Vielmehr wird der sichere Zustand durch Umkehrung der Drehrichtung des Elektromotors erreicht, der die mechanische Vorspannung zum Erreichen des sicheren Zustandes unterstützt.

Vor dem obigen Hintergrund ist es eine Aufgabe der Erfindung, ein verbessertes Verfahren zum Ansteuern einer Komponente eines Antriebsstranges eines Kraftfahrzeuges bzw. ein zugeordnetes Steuergerät anzugeben, mit denen eine hohe Prozesssicherheit bei geringem Aufwand erzielt werden kann.

Diese Aufgabe wird gelöst durch ein Verfahren zum Ansteuern einer Komponente eines Antriebsstranges eines Kraftfahrzeuges, wobei die Komponente mechanisch in einen sicheren Zustand vorgespannt ist, mit den Schritten, zunächst einen Fehlerzustand zu erfassen und zu erfassen, ob der Fehlerzustand ein erster oder ein zweiter Fehlerzustandstyp ist, wobei die Ansteuerung der Komponente sofort unterbrochen wird, so dass die Komponente durch die mechanische Vorspannung passiv in den sicheren Zustand überführt wird, wenn der Fehlerzustand vom ersten Fehlerzustandstyp ist, oder wobei die Komponente derart angesteuert wird, dass die Komponente aktiv aufgrund der Ansteuerung in den sicheren Zustand überführt wird, wenn der Fehlerzustand vom zweiten Fehlerzustandstyp ist.

Ferner wird die obige Aufgabe gelöst durch ein Steuergerät, insbesondere zum Steuern einer Komponente eines Antriebsstranges eines Kraftfahrzeuges, wobei in dem Steuergerät ein erfindungsgemäßes Verfahren implementiert ist.

Gemäß der Erfindung wird folglich zwischen unterschiedlichen Fehlerzuständen unterschieden. Die Fehlerzustände können dabei unterschiedlich schwerwiegend sein und/oder sicherheitstechnisch unterschiedliche Maßnahmen erfordern.

Bei dem Auftreten des ersten Fehlerzustandstyps erfolgt ein sofortiges Unterbrechen der Ansteuerung, so dass es innerhalb einer Sicherheitszeitspanne (Prozesssicherheitszeit) möglich ist, die Komponente allein durch die mechanische Vorspannung passiv in den sicheren Zustand zu überführen, und zwar vorzugsweise selbst dann, wenn hierbei eine Aktuatorik mitgeschleppt werden muss.

Wenn hingegen der zweite Fehlerzustandstyp auftritt, kann die Komponente aktiv so angesteuert werden, dass sie in den sicheren Zustand überführt wird. Dies kann dabei durch das Verfahren bzw. das Steuergerät selbst erfolgen, so dass zusätzliche und aufwändige Sicherheits-Hardware nicht erforderlich ist.

In der Praxis wird der erste Fehlerzustandstyp relativ selten auftreten, so dass in solchen Fällen ein frühzeitiges Abschalten der Ansteuerung der Komponente zu rechtfertigen ist.

Bei dem häufiger auftretenden zweiten Fehlerzustandstyp kann hingegen ein Fehlerzustand länger "toleriert" werden, da die Komponente aufgrund der aktiven Ansteuerung relativ schnell in den sicheren Zustand überführt werden kann.

Demzufolge kann aufgrund dieser höheren Toleranzschwelle ein unnötiges Zurücksetzen des Steuergerätes vermieden werden. In einem Steuergerät ist zusätzlich zu einer Steuersoftware vorzugsweise eine Sicherheitssoftware implementiert, die unabhängig von der Steuersoftware sicherheitskritische Zustände erkennen kann. Die Sicherheitssoftware überprüft dabei quasi die Funktion der Steuersoftware und kann beispielsweise beim Auftreten des zweiten Fehlerzustandstyps von sich aus unter Umgehung der Steuersoftware eine Ansteuerung der Komponente in die Wege leiten, so dass die Komponente aktiv in den sicheren Zustand überführt wird.

Mit anderen Worten kann durch das erfindungsgemäße Verfahren bei einem sicherheitskritischen Fehler ein sicherer Zustand innerhalb einer zulässigen Sicherheitszeitspanne (Prozesssicherheitszeit) erfolgen. Überwiegend (bei dem zweiten Fehlerzustandstyp) wird die Komponente mittels einer Aktuatorik dabei so angesteuert, dass die Komponente aktiv in den sicheren Zustand überführt wird. Solche Fehler, die dazu führen, dass eine softwareseitige Aktuierung nicht mehr möglich ist (zum Beispiel erster Fehlerzustandstyp), können dabei so frühzeitig erkannt werden, dass der sichere Zustand auch passiv (mittels der mechanischen Vorspannung) erreicht werden kann.

Dabei erfolgt bei Erkennen eines sicherheitskritischen Fehlers nicht in jedem Fall ein Unterbrechen der Ansteuerung (Abschalten der Ausgänge des Steuergerätes), sondern es erfolgt ggf. gezielt eine Aktion, um den Antriebsstrang schnell in den sicheren Zustand zu bringen. Dabei sind auch weniger dynamische Aktuatoranordnungen (zum Beispiel Elektromotoren) geeignet. Der Aufwand für eine separate Sicherheits-Hardware entfällt. Die aktive Ansteuerung der Komponente bei Auftreten des zweiten Fehlerzustandstyps kann hinsichtlich Signalgröße und Zeitdauer vorzugsweise frei programmiert werden.

Die Sicherheitssoftware ist auf dem Steuergerät vorzugsweise unabhängig von der Steuersoftware implementiert und vorzugsweise von einem solchen Standard, dass Softwarefehler in der Sicherheitssoftware nicht auftreten sollten. Die Steuersoftware ist in der Regel eine aufwändige Software mit komplexen Steueralgorithmen zum Ansteuern der Komponente unter Berücksichtigung verschiedener Fahrzustände und der Zustände von anderen Komponenten des Antriebsstranges. Die Steuersoftware kann nicht nur eine Komponente sondern gegebenenfalls mehrere Komponenten des Antriebsstranges ansteuern.

Aufgrund der Komplexität der Steuersoftware ist es nicht ausgeschlossen, dass diese in einen Fehlerzustand gerät ("sich aufhängt"). Dies wird von der Sicherheitssoftware erkannt. Das aktive Ansteuern der Komponente zum Erreichen des sicheren Zustands bedingt zwar auch, dass die Sicherheitssoftware die Komponente steuern kann. Der Funktionsumfang, der hierzu in der Sicherheitssoftware realisiert ist, kann jedoch deutlich geringer sein und sich beispielsweise auf einen einfachen Ablauf zum Überführen der Komponente in den sicheren Zustand beschränken. Der Funktionsumfang zum Ansteuern der Komponente ist in der Sicherheitssoftware folglich kleiner als in der Steuersoftware.

Die Aufgabe wird somit vollkommen gelöst.

Der erste Fehlerzustandstyp beinhaltet vorzugsweise solche Fehlerzustände, die von der Sicherheitssoftware nicht mehr beherrscht werden können.

Gemäß einer Ausführungsform beinhaltet der erste Fehlerzustandstyp folglich einen Prozessorfehler eines Steuergerätes, und zwar insbesondere einen Prozessorfehler eines Steuergerätes, mittels dessen das Ansteuerverfahren durchgeführt wird und auf dem gegebenenfalls auch die Sicherheitssoftware implementiert ist.

Gemäß einer weiteren Ausführungsform beinhaltet der erste Fehlerzustandstyp einen Energieversorgungsfehler, bei dem die Energieversorgung für ein Steuergerät fehlerhaft ist.

Dies wird in der Regel mittels einer separaten Energieversorgungs-Überwachungseinrichtung abgefragt.

Demzufolge ist es vorteilhaft, wenn der erste und/oder der zweite Fehlerzustandstyp von einer Überwachungseinrichtung erfasst wird, die einen Prozessor eines Steuergerätes und/oder eine Energieversorgung des Steuergerätes überwacht.

Eine Überwachungseinrichtung zum Überwachen des Prozessors kann beispielsweise ein "Watchdog"-Baustein sein. Die Überwachungseinrichtung zur Überwachung der Energieversorgung kann ein separater Baustein sein, der gegebenenfalls mit einem Watchdog-Baustein in Verbindung steht.

Gemäß einer weiteren bevorzugten Ausführungsform beinhaltet der zweite Fehlerzustandstyp einen Softwarefehler in einem Steuersoftwareabschnitt.

Der Steuersoftwareabschnitt ist dabei vorzugsweise ein übergeordneter Steuersoftwareabschnitt (High-Level-Software) und ist vorzugsweise auf einem Prozessor des Steuergerätes implementiert.

Gemäß einer weiteren bevorzugten Ausführungsform wird der erste und/oder der zweite Fehlerzustandstyp von einem Sicherheitssoftwareabschnitt erfasst.

Der Sicherheitssoftwareabschnitt ist dabei vorzugsweise ebenfalls eine übergeordnete Software (High-Level-Software), und ist vorzugsweise auf einem Prozessor installiert, vorzugsweise auf dem gleichen Prozessor wie der Steuersoftwareabschnitt.

Unter einem Prozessor wird vorliegend jede Art Architektur verstanden, also Prozessoren mit einem oder mehreren Kernen, Mehrprozessorsysteme, etc. Besonders bevorzugt handelt es sich bei dem Prozessor um einen einzelnen Baustein, und besonders bevorzugt um einen Mikrocontroller.

Ferner ist es vorteilhaft, wenn der Steuersoftwareabschnitt mit einem Ausgangssoftwareabschnitt in Verbindung tritt, der an wenigstens einem Prozessorausgang Signale ausgibt.

Ein derartiger Ausgangssoftwareabschnitt kann als untergeordnete Software (Low-Level-Software) realisiert sein. Der Ausgangssoftwareabschnitt ist jedoch vorzugsweise als sicherheitsrelevanter Softwareabschnitt realisiert, in ähnlicher Form wie der Sicherheitssoftwareabschnitt. Daher kann der Ausgangssoftwareabschnitt vorzugsweise auch dann noch auf dem Prozessor aktiv sein ("laufen"), wenn sich der Steuersoftwareabschnitt in einem Fehlerzustand befindet (sich "aufgehängt" hat).

Von dem Ausgangssoftwareabschnitt werden vorzugsweise Signale zum Betätigen der Komponente des Antriebsstranges ausgegeben.

Dabei ist es von besonderem Vorzug, wenn der Sicherheitssoftwareabschnitt mit dem Ausgangssoftwareabschnitt in Verbindung tritt, um die aktive Zustandsüberführung in den sicheren Zustand durchzuführen.

Mit anderen Worten wird bei Auftreten des zweiten Fehlerzustandstyps eine aktive Überführung in den sicheren Zustand durchgeführt, indem der Sicherheitssoftwareabschnitt Vorgaben zum Erreichen des sicheren Zustandes an den Ausgangssoftwareabschnitt übergibt, der dann die entsprechenden Signale zum Überführen der Komponente in den sicheren Zustand an wenigstens einem Prozessorausgang ausgibt.

Dabei ist es gemäß einer Ausführungsform möglich, dass der Ausgangssoftwareabschnitt Steuersignale an dem wenigstens einen Prozessorausgang ausgibt, die mittels einer Ansteuerhardware in Ansteuersignale für einen Aktuator zum Betätigen der Komponente umgesetzt werden.

Die Ansteuersignale können für den Fall, dass die Aktuatoranordnung einen Elektromotor beinhaltet, beispielsweise Dreiphasen-Signale für eine Leistungselektronik (Endstufe) des Elektromotors sein, die beispielsweise eine Halbleiter-Brückenschaltung beinhaltet.

Die Steuersignale können dabei Elektromotor-spezifische Vorgaben hinsichtlich Drehzahl und/oder Drehrichtung sein. Die Ansteuerhardware ist vorzugsweise als separater Hardwarebaustein realisiert, beispielsweise in Form eines ASIC, und ist beispielsweise Elektromotor-spezifisch realisiert, so dass Vorgaben hinsichtlich Drehzahl und/oder Drehrichtung speziell für den verwendeten Elektromotor in die entsprechenden Dreiphasen-Signale für die Leistungselektronik umgesetzt werden.

In einem derartigen Fall kann auf eine derartige komplexe Umsetzungs-Logik innerhalb des Prozessors des Steuergerätes vorzugsweise verzichtet werden.

Der Ausgangssoftwareabschnitt erzeugt in diesem Fall beispielsweise Signale betreffend die Komponente (zum Beispiel Stellweg einer Kupplung) und setzt diese in die entsprechenden Steuersignale um, die an dem Prozessorausgang ausgegeben werden.

Gemäß einer alternativen Ausführungsform, die unabhängig von der eingangs genannten Unterscheidung zwischen erstem und zweitem Fehlerzustandstyp eine eigene Erfindung darstellt, ist auf einem Prozessor eines Steuergerätes zum Betätigen einer Komponente eines Antriebsstranges ein Ausgangssoftwareabschnitt installiert, der dazu ausgelegt und/oder eingerichtet ist, Steuersignale in Ansteuersignale umzusetzen, die unmittelbar zum Ansteuern einer Aktuatoranordnung zum Betätigen der Komponente verwendbar sind.

Bei dieser Ausführungsform erfolgt die Umsetzung von Steuersignalen wie Drehrichtung und Drehzahl eines Elektromotors in Ansteuersignale nicht innerhalb eines separaten Bausteins (ASIC), sondern innerhalb des Ausgangssoftwareabschnittes. An dem wenigstens einen Prozessorausgang können dabei die Ansteuersignale (wie zum Beispiel Dreiphasen-Signale für eine Endstufe eines Elektromotors) ausgegeben werden.

Bei dieser Ausführungsform ist ein separater Baustein zum Umsetzen der Steuersignale in Ansteuersignale nicht notwendig, so dass der Hardware-Aufwand reduziert ist.

Insgesamt ist es bevorzugt, wenn die mechanische Vorspannung so eingerichtet ist, dass die passive Zustandsüberführung in den sicheren Zustand innerhalb einer ersten vorgegebenen Zeitspanne erfolgt, die kleiner ist als eine Sicherheitszeitspanne abzüglich einer ersten Fehlererkennungszeitspanne.

Die erste Fehlererkennungszeitspanne kann dabei relativ kurz sein.

Gemäß einer weiteren bevorzugten Ausführungsform ist eine Ansteuerdynamik der Komponente so eingerichtet, dass die aktive Zustandsüberführung in den sicheren Zustand innerhalb einer zweiten vorgegebenen Zeitspanne erfolgt, die kleiner ist als eine Sicherheitszeitspanne (Prozesssicherheitszeit) abzüglich einer zweiten Fehlererkennungszeitspanne.

Die zweite Fehlererkennungszeitspanne kann dabei größer sein als die erste Fehlererkennungszeitspanne, so dass bei Auftreten des zweiten Fehlerzustandstyps eine höhere Toleranz gegenüber Fehlern gegeben ist bzw. über einen längeren Zeitraum (zweite Fehlererkennungszeitspanne) lang auf Sicherheitsmaßnahmen verzichtet werden kann. Dies kann dazu führen, dass ein Fahrer des Kraftfahrzeuges weniger von Ausfällen, Störungen oder Störungsmeldungen belästigt wird. Dies erhöht den Komfort des Kraftfahrzeuges insgesamt.

Wie oben erläutert, kann die Aktuatoranordnung zum Betätigen der Komponente eine fluidische Aktuatoranordnung (hydraulisch oder pneumatisch) oder einen elektromechanischen Aktuator beinhalten. Bei dem elektromechanischen Aktuator kann es sich um einen elektromagnetischen Aktuator handeln. Besonders bevorzugt ist es jedoch, wenn der Aktuator ein Elektromotor ist.

Die Komponente kann eine Kupplung oder eine Bremse in einem Getriebe eines Antriebsstranges sein, wie beispielsweise eine Trennkupplung in einem automatisierten Schaltgetriebe oder eine Trennkupplung in einem Doppelkupplungsgetriebe. Die Komponente kann jedoch auch innerhalb des eigentlichen Getriebes untergebracht sein, beispielsweise in Form einer Schaltkupplung zum Ein- und Auslegen von Gangstufen und/oder zum Ein- und Auslegen einer Parksperre. Die Komponente kann jedoch beispielsweise auch eine Längssperrkupplung bei Allrad-Antriebssträngen sein, und/oder eine Quersperrkupplung, wie auch eine Torque-Vectoring-Kupplung.

Sofern auf einem Prozessor ein Steuersoftwareabschnitt, ein Sicherheitssoftwareabschnitt und ein Ausgangssoftwareabschnitt implementiert sind, ist der Sicherheitssoftwareabschnitt bei der Umsetzung von Anforderungen an den Ausgangssoftwareabschnitt gegenüber dem Steuersoftwareabschnitt vorzugsweise priorisiert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeug-Antriebsstranges mit einer Steueranordnung;
- Fig. 2: ein schematisches Flussdiagramm zur Darstellung einer Ausführungsform eines erfindungsgemäßen Verfahrens;
- Fig. 3: ein Diagramm einer Sicherheitskenngröße über der Zeit bei Erfassung eines Fehlers vom ersten Fehlerzustandstyp;
- Fig. 4: eine der Fig. 3 entsprechende Darstellung einer Sicherheitskenngröße bei Erfassen eines Fehlers vom zweiten Fehlerzustandstyp;
- Fig. 5: eine Darstellung einer alternativen Implementierung des Steuergerätes der Fig. 1; und
- Fig. 6: eine schematische Darstellung einer weiteren alternativen Implementierung des Steuergerätes der Fig. 1.

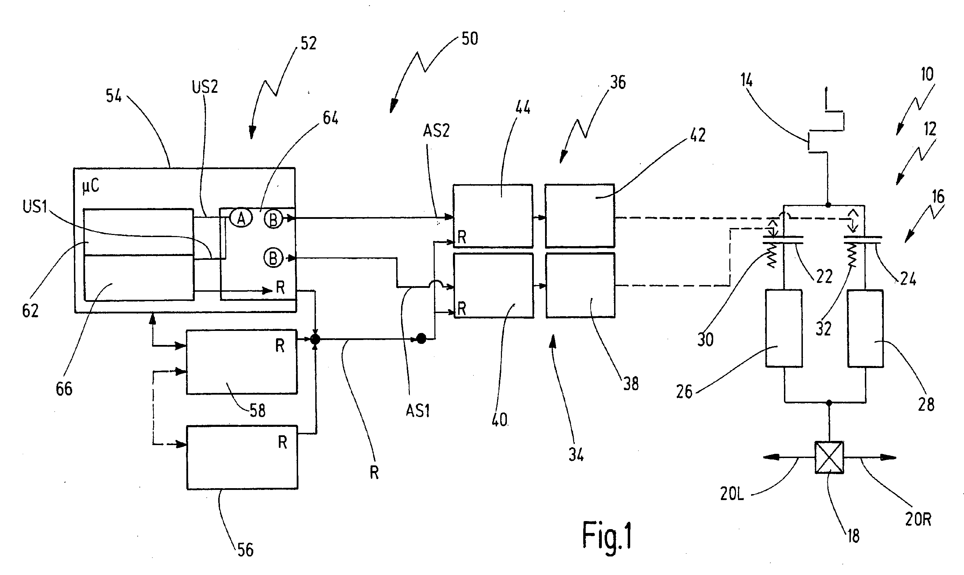

In Fig. 1 ist in schematischer Darstellung ein Kraftfahrzeug 10 gezeigt, dessen Antriebsstrang generell mit 12 bezeichnet ist.

Der Antriebsstrang 12 weist einen Antriebsmotor 14 wie einen Verbrennungsmotor oder einen Hybrid-Antriebsmotor auf. Eine Antriebswelle des Antriebsmotors 14 ist mit einem Eingang eines Doppelkupplungsgetriebes 16 verbunden. Ein Ausgang des Doppelkupplungsgetriebes 16 ist mit einem Differential 18 verbunden, das Antriebsleistung auf angetriebene Räder 20L, 20R des Kraftfahrzeugs 10 verteilt. Das Differential 18 kann ein mechanisches Differential sein, kann jedoch auch ein Twin-Kupplungs-Differential mit zwei unabhängig voneinander ansteuerbaren Reibkupplungen sein.

Das Doppelkupplungsgetriebe 16 beinhaltet eine Reibkupplung 22 und eine zweite Reibkupplung 24, deren gemeinsames Eingangsglied mit der Ausgangswelle des Antriebsmotors 14 verbunden ist. Ferner weist das Doppelkupplungsgetriebe 16 ein erstes Teilgetriebe 26 auf, das beispielsweise den ungeraden Gangstufen 1, 3, 5, ... zugeordnet ist. Einem zweiten Teilgetriebe 28 des Doppelkupplungsgetriebes 16 sind dann beispielsweise die geraden Gangstufen 2, 4, 6, ... zugeordnet. Ein Eingangsglied des ersten Teilgetriebes 26 ist mit einem Ausgangsglied der ersten Reibkupplung 22 verbunden. Ein Eingangsglied des zweiten Teilgetriebes 28 ist mit einem Ausgangsglied der zweiten Reibkupplung 24 verbunden. Ein gemeinsamer Ausgang der Teilgetriebe 26, 28 ist mit einem Eingangsglied des Differentials 18 verbunden.

Die erste Reibkupplung 22 ist mittels einer ersten Vorspannfeder 30 in einen sicheren Zustand vorgespannt, bei dem es sich um einen geschlossenen Zustand der Reibkupplung 22 handeln kann, bei dem es sich jedoch vorzugsweise um einen offenen Zustand der Reibkupplung 22 handelt, bei dem diese kein oder im Wesentlichen kein Antriebsmoment übertragen kann ("normally open"). In entsprechender Weise ist die zweite Reibkupplung 24 mittels einer zweiten Vorspannfeder 32 in einen sicheren Zustand vorgespannt.

Die Reibkupplungen 22, 24 können als trockene Reibkupplungen oder auch als nasslaufende Reibkupplungen ausgebildet sein.

Die erste Reibkupplung 22 wird mittels einer ersten Aktuatoranordnung 34 betätigt. Die zweite Reibkupplung 24 wird mittels einer zweiten Aktuatoranordnung 36 betätigt. Die Aktuatoranordnungen 34, 36 können fluidische Aktuatoranordnungen sein, sind jedoch vorzugsweise elektromechanische Aktuatoranordnungen. Im vorliegenden Fall beinhaltet die erste Aktuatoranordnung 34 einen ersten Aktuator 38 in Form eines Elektromotors, der mittels einer ersten Endstufe 40 (erste Leistungselektronik) angesteuert wird. In entsprechender Weise beinhaltet die zweite Aktuatoranordnung 36 einen zweiten Aktuator 42 in Form eines Elektromotors, der mittels einer zweiten Endstufe 44 angesteuert wird. Die Elektromotoren 38, 42 sind vorzugsweise bürstenlose Motoren, wie beispielsweise permanent erregte Gleichstrommotoren. Ferner können die Elektromotoren 38, 42 vorzugsweise in beiden Drehrichtungen angetrieben werden.

Der Antriebsstrang 12 beinhaltet ferner eine Steueranordnung 50. Die Steueranordnung 50 weist ein Steuergerät 52 auf, mittels dessen die Aktuatoranordnungen 34, 36 angesteuert werden. Dabei wird von dem Steuergerät 52 ein erstes Ansteuersignal AS1 an die erste Endstufe 40 abgegeben, und ein zweites Ansteuersignal AS2 wird von dem Steuergerät 52 an die zweite Endstufe 44 abgegeben. Die Ansteuersignale AS1, AS2 können beispielsweise dreiphasige Signale sein, mittels denen Transistor- oder Thyristor-Brückenschaltungen in den Endstufen 40, 44 angesteuert werden.

Das Steuergerät 52 beinhaltet im vorliegenden Fall einen Prozessor 54, der vorliegend als Mikrocontroller µC ausgebildet ist. Ferner beinhaltet das Steuergerät 52 eine Spannungsüberwachungseinrichtung 56, mittels der die Energieversorgung bzw. die Spannungsversorgung der Steueranordnung und/oder von anderen elektrischen Baugruppen 50 überwacht wird. Das Steuergerät 52 beinhaltet ferner eine allgemeine Überwachungseinrichtung 58, die beispielsweise als Watchdog-Baustein ausgebildet sein kann. Die Überwachungseinrichtung 58 überwacht insbesondere die Funktion des Prozessors 54 (durch an sich bekannte Abfragemechanismen, wie sie von Watchdog-Bausteinen ausgeführt werden). Die Überwachungseinrichtung 58 kann gegebenenfalls auch mit der Spannungsüberwachungseinrichtung 56 in Verbindung stehen, was in Fig. 1 gestrichelt dargestellt ist.

Auf dem Prozessor 54 ist eine Mehrzahl von Softwareabschnitten implementiert, die unterschiedliche Komplexität, unterschiedliche Level und/oder eine unterschiedliche Relevanz hinsichtlich der Sicherheit haben können. Im vorliegenden Fall ist auf dem Prozessor 54 ein Steuersoftwareabschnitt 62 implementiert, der die Steuerungs- bzw. Regelungsalgorithmen für die Reibkupplungen 22, 24 beinhaltet. Der Steuersoftwareabschnitt 62 kann zu diesem Zweck mit geeigneten Eingangssignalen (wie beispielsweise Ist-Stellung der Reibkupplungen, aktuelle Drehmomentübertragung der Reibkupplungen, etc.) versorgt werden, was in Fig. 1 aus Gründen der Übersichtlichkeit nicht dargestellt ist. Der Steuersoftwareabschnitt 62 ist ein High-Level-Abschnitt, ist jedoch vorzugsweise nicht sicherheitsrelevant.

Auf dem Prozessor 54 ist ferner ein Ausgangssoftwareabschnitt 64 implementiert, der als Low-Level-Abschnitt ausgebildet ist. Der Ausgangssoftwareabschnitt 64 ist vorzugsweise sicherheitsrelevant.

Unter einem sicherheitsrelevanten Softwareabschnitt wird vorliegend vorzugsweise Folgendes verstanden. Ein sicherheitsrelevanter Softwareabschnitt ist vorzugsweise dafür verantwortlich, dass Sicherheitszielverletzungen erkannt werden und das System innerhalb einer bestimmten Zeit in einen sicheren Zustand überführt werden kann. Sicherheitszielverletzungen sind dabei vorzugsweise schwerwiegende Fehler, wie z.B. das Anfahren in die falsche Fahrtrichtung. Weitere schwerwiegende Fehler können beispielsweise sein eine ungewollte Motormomentenerhöhung durch spontanes Gasgeben, ein ungewolltes Anfahren, etc. Im Gegensatz hierzu sind nicht schwerwiegende Fehler beispielsweise ein zu sanftes oder zu hartes Schalten, ein zu frühes oder zu spätes Schalten mit entsprechendem Drehzahlabfall oder ungewollt hohen Drehzahlen. Ferner kann ein sicherheitsrelevanter Softwareabschnitt eine Software sein, die in besonderem Maße auf Fehlerfreiheit geprüft worden ist. Ein Low-Level-Softwareabschnitt beinhaltet vorzugsweise hardwarenahe Software, wie z.B. Betriebssystem, BIOS, VIOS, Treiber, etc. Ein High-Level-Softwareabschnitt ist eine funktionsnahe Software, die in der Regel auf der Low-Level-Software aufsetzt. Ein High-Level-Softwareabschnitt kann vorzugsweise sämtliche durch Software darzustellenden Funktionen realisieren. Beispielsweise kann ein Low-Level-Softwareabschnitt Sensorsignale einlesen, Aktuatoren ansteuern, etc. Insbesondere werden von dem Low-Level-Softwareabschnitt Sensorsignale (Kurzschlüsse, Unterbrechungen) überwacht. Komplexe Themen, bei denen mehrere Signale in einer komplexen Diagnose ausgewertet werden, sind dem High-Level-Softwareabschnitt zugeordnet. Ein komplexes Thema ist beispielsweise die Erkennung einer falschen Fahrtrichtung, wobei ausgewertet wird, ob der Wählhebel im Fahrzeug auf Fahrtrichtung vorwärts eingestellt ist, ob im Getriebe eine Rückwärtsgangstufe eingelegt ist und ob die zugeordnete Kupplung ein Moment größer einer bestimmten Schwelle überträgt. Schwerwiegende Fehler können sowohl durch den Low-Level-Softwareabschnitt als auch durch den High-Level-Softwareabschnitt erkannt werden. Beide Softwareabschnitte sind vorzugsweise sicherheitsrelevant.

Der Ausgangssoftwareabschnitt 64 erhält von dem Steuersoftwareabschnitt 62 übergeordnete Steuersignale US1, US2, die beispielsweise eine Soll-Kupplungsposition oder ähnliche Sollwerte beinhalten. Der Ausgangssoftwareabschnitt 64 setzt diese übergeordneten Steuersignale US1, US2 in Steuersignale um, die beispielsweise die Drehzahl und die Drehrichtung für den ersten Elektromotor 38 und die Drehzahl und die Drehrichtung für den zweiten Elektromotor 42 beinhalten. Im vorliegenden Fall ist der Ausgangssoftwareabschnitt 64 ferner dazu ausgelegt, diese Steuersignale in die Ansteuersignale AS1, AS2 umzusetzen, die beispielsweise dreiphasige Signale für die Endstufen 40, 44 sein können.

Auf dem Prozessor 54 ist ferner ein Sicherheitssoftwareabschnitt 66 implementiert. Dieser ist vorzugsweise ein High-Level-Abschnitt und ist vorzugsweise ein sicherheitsrelevanter High-Level-Abschnitt. Der Sicherheitssoftwareabschnitt 66 überwacht durch geeignete Maßnahmen andere Softwareabschnitte, die auf dem Prozessor 54 implementiert sind und/oder das gesamte System (Antriebsstrang 12 mit oder ohne Antriebsmotor 14) Der Sicherheitssoftwareabschnitt 66 kann dabei beispielsweise eine Fehlerkenngröße verwalten, die ein Maß für die Schwere einer Störung bzw. eines Fehlers ist.

Der Sicherheitssoftwareabschnitt 66 überwacht vorzugsweise die Funktionsweise, und besonders bevorzugt die Fehlerkenngröße des Steuersoftwareabschnittes 62, und kann bei Bedarf unterschiedliche Maßnahmen einleiten. Ferner steht der Sicherheitssoftwareabschnitt 66 mit dem Ausgangssoftwareabschnitt 64 in Verbindung. Der Sicherheitssoftwareabschnitt 66 ist dabei gegenüber dem Steuersoftwareabschnitt 62 priorisiert, was den Zugriff auf den Ausgangssoftwareabschnitt 64 angeht. Der Ausgangssoftwareabschnitt 64 verwaltet einen Reset-Ausgang R, auf den der Sicherheitssoftwareabschnitt 66 unmittelbaren Zugriff hat. Ein derartiger Reset-Ausgang R ist ferner ebenfalls an der Spannungsüberwachungseinrichtung 56 und an der Überwachungseinrichtung 58 vorgesehen. Falls an einem dieser Reset-Ausgänge R ein Reset-Signal auftritt (beispielsweise ein Wechsel von 1 nach 0), werden die Endstufen 40, 44, die einen Reset-Eingang aufweisen, sofort stromlos geschaltet. Ein Reset-Signal wird insbesondere dann ausgegeben, wenn ein Zurücksetzen und Neustarten des Prozessors 54 notwendig ist. Dies ist in der Regel nur dann erforderlich, wenn ein schwerer Fehler aufgetreten ist, der vorliegend als ein Fehlerzustand von einem ersten Fehlerzustandstyp bezeichnet wird.

Im Falle eines Zurücksetzens des Prozessors 54 und eines Reset-Signals auf der Leitung R werden die Endstufen 40, 44 sofort stromlos geschaltet, was dazu führt, dass die Elektromotoren 38, 42 keine Antriebsleistung mehr übertragen können. In diesem Fall werden die Reibkupplungen 22, 24 mittels der Vorspannfedern 30, 32 in den sicheren Zustand überführt. Hierbei ist es gegebenenfalls notwendig, die Elektromotoren 38, 42 mitzuschleppen.

Dieses Überführen in den sicheren Zustand wird vorliegend als passives Überführen bezeichnet.

Wenn von dem Sicherheitssoftwareabschnitt 66 ein anderer schwerer Fehler erfasst wird, der vorliegend als Fehlerzustand vom zweiten Fehlerzustandstyp bezeichnet wird, kann der Sicherheitssoftwareabschnitt 66 über den Ausgangssoftwareabschnitt 64 auch ein aktives Überführen von wenigstens einer der Reibkupplungen 22, 24 in den sicheren Zustand in die Wege leiten. Dabei ist, wie erwähnt, der Sicherheitssoftwareabschnitt 66 gegenüber dem Steuersoftwareabschnitt 62 priorisiert.

So kann der Sicherheitssoftwareabschnitt 66 bei Erfassen eines Fehlerzustandes vom zweiten Fehlerzustandstyp den Ausgangssoftwareabschnitt 64 dazu bringen, unabhängig von den Ausgängen des Steuersoftwareabschnittes 62 die Reibkupplungen 22, 24 schnell in einen sicheren Zustand zu überführen. Zu diesem Zweck kann der Ausgangssoftwareabschnitt 64 in diesem Fall vorzugsweise Signale erzeugen, mittels derer die Elektromotoren 38, 42 beider Reibkupplungen 22, 24 schnell in einen sicheren Zustand überführen, was beispielsweise mit einem Wechsel der Drehrichtung einhergehen kann. Es kann auch vorgesehen sein, dass der Sicherheitssoftwareabschnitt 66 nicht beide Reibkupplungen 22, 24 gleichzeitig in den sicheren Zustand überführt. Im Falle eines Auftretens eines Fehlerzustandes vom zweiten Fehlerzustandstyp, der nur eine der zwei Reibkupplungen betrifft, kann es auch möglich sein, dass der Sicherheitssoftwareabschnitt 66 den Ausgangssoftwareabschnitt 64 lediglich dazu anweist, die betroffene Reibkupplung in den sicheren Zustand zu überführen, also nur eine der zwei Reibkupplungen 22, 24 aktiv in den sicheren Zustand zu überführen. Am Ende einer derartigen Aktion kann dann bevorzugt ein Reset des Prozessors 54 bzw. des Steuergerätes 52 erfolgen.

In einer abgewandelten Ausführungsform kann der Antriebsstrang 12 auch nur eine Reibkupplung aufweisen, beispielsweise in Verbindung mit einem automatisierten Schaltgetriebe. Ferner kann der Antriebsstrang 12 auch eine oder mehrere Reibkupplungen in einer Twin-Kupplungsanordnung eines Differentials 18 beinhalten. Auch ist es möglich, dass der Antriebsstrang 12 Quersperrkupplungen zum Sperren einer Achse und/oder Längssperrkupplungen zum Sperren von zwei angetriebenen Achsen eines Kraftfahrzeuges beinhaltet. Generell ist es möglich, dass in diesem Fall nur eine Aktuatoranordnung (zum Beispiel 34) zum Betätigen einer einzelnen solchen Reibkupplung vorgesehen ist. Alternativ ist es möglich, dass auch für eine Mehrzahl derartiger Reibkupplungen jeweilige Aktuatoranordnungen vorgesehen sind, die mit dem Steuergerät verbunden sind.

Schließlich ist es auch möglich, dass weitere Aktuatoranordnungen auf die gleiche oder eine entsprechende Art und Weise mittels des Steuergerätes 54 überwacht bzw. angesteuert werden, wobei die weiteren Aktuatoranordnungen beispielsweise eine oder mehrere Schaltkupplungen in einem Getriebe oder in den Teilgetrieben 26, 28 betätigen und/oder eine Parksperre in einem Getriebe bzw. einem der Teilgetriebe 26, 28.

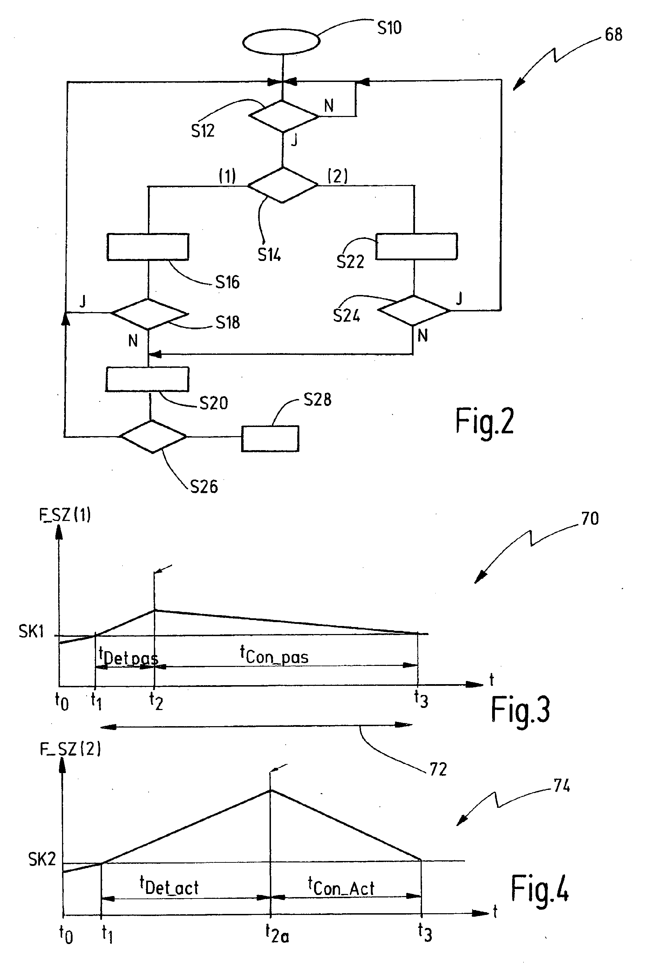

In Fig. 2 ist in schematischer Form ein Verfahren zum Ansteuern einer Komponente eines Antriebsstranges eines Kraftfahrzeuges dargestellt, wobei die Komponente mechanisch in einen sicheren Zustand vorgespannt ist. Das Verfahren 68 geht aus von einem Startzustand S10, auf den in einem Schritt S12 eine Abfrage erfolgt, ob ein Fehlerzustand vorliegt. Wenn dies nicht der Fall ist, geht das Verfahren zurück zum Eingang von Schritt S12. Im Falle des Erfassens eines Fehlerzustandes (J in Schritt S12) erfolgt eine weitere Abfrage im Schritt S14, ob es sich bei dem Fehlerzustand um einen ersten oder einen zweiten Fehlerzustandstyp handelt. Wenn es sich bei dem Fehlerzustand um einen ersten Fehlerzustandstyp handelt (1), erfolgt vorzugsweise unmittelbar ein Reset des Steuergerätes im Schritt S20. In einem alternativen Verfahren geht das Verfahren über zum Schritt S16. In dem Schritt S16 wird die Ansteuerung der Komponente sofort unterbrochen, so dass die Komponente durch die mechanische Vorspannung passiv in den sicheren Zustand überführt wird. Im Anschluss an den Schritt S16 wird in einem Schritt S18 abgefragt, ob der Fehlerzustand behebbar ist und gleichzeitig behoben ist. Wenn dies der Fall ist (J im Schritt S18), geht das Verfahren zum Eingang vom Schritt S12 zurück. Im anderen Fall wird zunächst ein Reset des Steuergerätes ausgelöst, und zwar im Schritt S20. Wie gesagt, vorzugsweise erfolgt jedoch dann, wenn es sich bei dem Fehlerzustand um einen ersten Fehlerzustandstyp handelt (1), unmittelbar nach dem Schritt S14 ein Reset im Schritt S20, wobei die Schritte S16 und S18 nicht durchgeführt werden. Nach dem Reset im Schritt S20 läuft das Steuergerät sofort wieder hoch.

Wenn im Schritt S14 ein zweiter Fehlerzustandstyp erfasst wird (2), geht das Verfahren über zum Schritt S22. Im Schritt S22 wird die Komponente derart angesteuert, dass die Komponente aktiv in den sicheren Zustand überführt wird. Nach dem Schritt S22 wird dann vorzugsweise in jedem Fall ein Reset im Schritt S20 ausgeführt. In einer alternativen Variante kann im Anschluss an den Schritt S22 eine dem Schritt S18 entsprechende Abfrage S24 erfolgen, die entweder zum Eingang des Verfahrens führt oder aber zu einem Reset des Steuergerätes (S20). Nach einem Reset des Steuergerätes erfolgt in einem Schritt S26 eine Abfrage, ob die Anzahl der an dem Steuergerät durchgeführten Resets kleiner ist als eine vorgegebene Anzahl. Wenn dies der Fall ist, geht das Verfahren zum Eingang von Schritt S12 zurück. Wenn die Anzahl der Resets die vorgegebene Reset-Anzahl überschritten hat, geht das Verfahren über zum Schritt S28. Im Schritt S28 wird das Steuergerät bzw. der Antriebsstrang dauerhaft abgeschaltet, so dass das Kraftfahrzeug liegen bleibt und Reparaturmaßnahmen eingeleitet werden müssen.

In Fig. 3 ist ein Diagramm einer Fehlerkenngröße F_SZ über der Zeit t dargestellt.

Die Fehlerkenngröße F_SZ ist eine in dem Sicherheitssoftwareabschnitt 66 verwaltete Kenngröße, die dem Maß bzw. der Schwere eines aufgetretenen Fehlers entspricht. Im vorliegenden Fall ist im Diagramm 70 eine Fehlerkenngröße F_SZ(1) gezeigt, die dem ersten Fehlerzustand zugeordnet ist. Hierbei wird für die Kenngröße eine erste Sicherheitsschwelle SK1 definiert. Solange die Kenngröße F_SZ(1) unterhalb der Schwelle SK1 ist, liegt ein tolerierbarer Fehler vor, der kein Einleiten von sicherheitstechnischen Maßnahmen erfordert. Dies ist in Fig. 3 vom Zeitpunkt t₀ bis t₁ der Fall. Wenn die Schwelle SK1 überschritten wird, wird nach Ablauf einer Fehlererkennungszeit t_{Det_pas} zum Zeitpunkt t₂ ein passives Überführen der Komponente in den sicheren Zustand eingeleitet. Dies führt zu einem Überführen der Komponente in den sicheren Zustand mittels der mechanischen Vorspannung, was relativ gesehen lange dauern kann, was in Fig. 3 von t₂ bis t₃ (bzw. bei t_{Con_pas}) gezeigt ist. Zum Zeitpunkt t₃ ist dann die Komponente so weit in den sicheren Zustand überführt, dass die Schwelle SK1 wieder unterschritten wird.

Von t₁ bis t₃ ist eine sogenannte Sicherheitszeitspanne 72 definiert. Dies ist eine vom Fahrzeugtyp und/oder verschiedenen Randbedingungen abhängige vorgegebene Zeitspanne, innerhalb der der Antriebsstrang nach Erkennen eines Fehlers (zum Zeitpunkt t₁) wieder in einen sicheren Zustand überführt werden muss (zum Zeitpunkt t₃). Da das passive Überführen in den sicheren Zustand relativ lange dauern kann (geringe Steigung des Kennwertes F_SZ in diesem Fall), muss die Zeit t₁ bis t₂ relativ kurz gehalten werden.

Beispielsweise kann die Zeit t₁ bis t₂ im Bereich von 5 bis 100 ms liegen, wobei die Sicherheitszeitspanne 72 beispielsweise im Bereich von 150 bis 500 ms liegen kann.

In Fig. 4 ist ein der Fig. 3 entsprechendes Diagramm 74 dargestellt, das eine Kenngröße F_SZ(2) zeigt, die einem zweiten Fehlerzustandstyp zugeordnet ist. Auch hier ist ein Schwellenwert SK2 vorgesehen. Wenn der Kennwert F_SZ(2) zum Zeitpunkt t₁ den Schwellenwert SK2 überschreitet, kann noch für eine relativ lange Fehlererkennungszeit t_{Det_act} dieser Fehlerzustand toleriert werden, und zwar bis zu einem Zeitpunkt t₂ₐ. Erst zu diesem Zeitpunkt wird ein aktives Überführen der Komponente in den sicheren Zustand eingeleitet, und zwar durch aktives Ansteuern des zugeordneten Aktuators. Hierdurch kann die Komponente sehr viel schneller in den sicheren Zustand überführt werden (innerhalb des Zeitraumes t_{Con_act} im Zeitraum von t₂ₐ bis t₃). Demzufolge kann auch bei einer längeren Tolerierung des Kennwertes F_SZ(2) noch ein sicherer Zustand innerhalb der Sicherheitszeitspanne (Prozesssicherheitszeit) 72 erreicht werden, die gleich der in Fig. 3 gezeigten Sicherheitszeitspanne ist.

Die Kennwerte F_SZ(1) und F_SZ(2) können auch durch einen einzigen Kennwert gebildet sein. Auch können die Schwellenwerte SK1, SK2 identisch sein.

In diesem Fall wird über einen weiteren nicht dargestellten Kennwert unterschieden, ob es sich bei einem aufgetretenen Fehler um einen Fehler des ersten oder des zweiten Fehlerzustandstyps handelt.

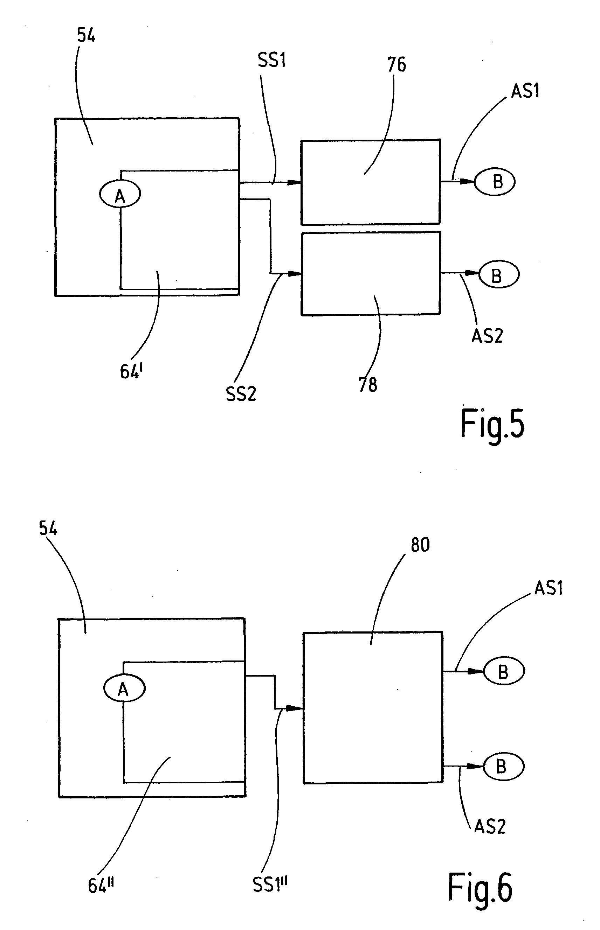

In den Fig. 5 und 6 sind Varianten der Steueranordnung 50 der Fig. 1 dargestellt, wobei die Varianten über Anschlusspunkte A, B in das Schema der Fig. 1 einfügbar sind.

Bei der Variante der Fig. 5 beinhaltet der Prozessor 54 einen Ausgangssoftwareabschnitt 64', dessen Aufbau und Funktionsweise dem Ausgangssoftwareabschnitt 64 der Fig. 1 entspricht. Im vorliegenden Fall werden von dem Ausgangssoftwareabschnitt 64' Steuersignale SS1, SS2 ausgegeben, die beispielsweise jeweils eine Drehzahl und eine Drehrichtung der jeweiligen Elektromotoren repräsentieren. Diese Steuersignale SS1, SS2 werden vorliegend einem ersten Ansteuerbaustein 76 bzw. einem zweiten Ansteuerbaustein 78 zugeführt, die die Steuersignale SS1, SS2 in jeweilige Ansteuersignale AS1, AS2 umsetzen. Bei den Ansteuerbausteinen 76, 78 kann es sich beispielsweise um ASIC-Bausteine handeln, die vorzugsweise motorspezifisch realisiert sind.

In Fig. 6 ist eine Variante gezeigt, bei der der Prozessor 54 einen Ausgangssoftwareabschnitt 64" aufweist, der hinsichtlich Aufbau und Funktionsweise generell dem Ausgangssoftwareabschnitt 64' der Fig. 5 entspricht. Vorliegend wird von dem Ausgangssoftwareabschnitt 64" lediglich ein Signal SS1" abgegeben, das einem einzelnen, gemeinsamen Ansteuerbaustein 80 zugeführt wird. Das Signal SS1" kann dabei die Drehzahlen und die Drehrichtungen von einem oder mehreren Elektromotoren beinhalten. Der gemeinsame Ansteuerbaustein 80 setzt das Steuersignal SS1" wiederum in die Ansteuersignale AS1, AS2 um.

Weitere Funktionen der Steueranordnung 50, die zum Überführen einer Komponente in einen sicheren Zustand erforderlich sind (zum Beispiel das Auswerten von Sensorsignalen etc.), können entweder von intelligenten Bausteinen (ASICs, Prozessoren etc.) oder von Softwareabschnitten umgesetzt werden. Derartige Softwareabschnitte sind in diesem Fall sicherheitsrelevant und werden daher vorzugsweise in einem sicherheitsrelevanten Low-Level-Softwareabschnitt umgesetzt.

## Patentansprüche

1. Verfahren (68) zum Ansteuern einer Komponente (22, 24) eines Antriebsstranges (12) eines Kraftfahrzeuges (10), wobei die Komponente (22, 24) mechanisch in einen sicheren Zustand vorgespannt ist, mit dem Schrit:
- Erfassen (S12) eines Fehlerzustandes,
**gekennzeichnet durch** die Schritte:
- Erfassen (S14), ob der Fehlerzustand ein erster oder ein zweiter Fehlerzustandstyp ist,
- sofortiges Unterbrechen (S16) der Ansteuerung der Komponente (22, 24), so dass die Komponente (22, 24) **durch** die mechanische Vorspannung (30, 32) passiv in den sicheren Zustand überführt wird, wenn der Fehlerzustand vom ersten Fehlerzustandstyp ist, oder Ansteuern (S22) der Komponente (22, 24), derart, dass die Komponente (22, 24) aktiv in den sicheren Zustand überführt wird, wenn der Fehlerzustand vom zweiten Fehlerzustandstyp ist.

2. Verfahren nach Anspruch 1, wobei der erste Fehlerzustandstyp einen Prozessorfehler eines Steuergerätes (52) beinhaltet.

3. Verfahren nach Anspruch 1 oder 2, wobei der erste Fehlerzustandstyp einen Energieversorgungsfehler beinhaltet, bei dem die Energieversorgung für ein Steuergerät (52) fehlerhaft ist.

4. Verfahren nach Anspruch 2 oder 3, wobei der erste und/oder der zweite Fehlerzustandstyp von einer Überwachungseinrichtung (58) erfasst wird, die einen Prozessor (54) eines Steuergerätes (52) und/oder eine Energieversorgung des Steuergerätes (52) überwacht.

5. Verfahren nach einem der Ansprüche 1 bis 4, wobei der zweite Fehlerzustandstyp einen Softwarefehler in einem Steuersoftwareabschnitt (62) beinhaltet.

6. Verfahren nach einem der Ansprüche 1 bis 5, **dadurch gekennzeichnet, dass** der erste und/oder der zweite Fehlerzustandstyp von einem Sicherheitssoftwareabschnitt (66) erfasst wird.

7. Verfahren nach Anspruch 5 oder 6, wobei der Steuersoftwareabschnitt (62) mit einem Ausgangssoftwareabschnitt (64) in Verbindung tritt, der an wenigstens einem Prozessorausgang Signale (AS1, AS2; SS1', SS2'; SS1") ausgibt.

8. Verfahren nach Anspruch 7, wobei der Sicherheitssoftwareabschnitt (66) mit dem Ausgangssoftwareabschnitt (64) in Verbindung tritt, um die aktive Zustandsüberführung in den sicheren Zustand durchzuführen.

9. Verfahren nach Anspruch 7 oder 8, wobei der Ausgangssteuerabschnitt (64'; 64") Steuersignale (SS1, SS2; SS1") an dem wenigstens einen Prozessorausgang ausgibt, die mittels einer Ansteuerhardware (76, 78; 80) in Ansteuersignale (AS1, AS2) für eine Aktuatoranordnung (34, 36) zum Betätigen der Komponente (22, 24) umgesetzt werden.

10. Verfahren nach einem der Ansprüche 1 bis 9, wobei auf einem Prozessor (54) eines Steuergerätes (52) zum Betätigen einer Komponente (22, 24) eines Antriebsstranges (12) ein Ausgangssoftwareabschnitt (64) installiert ist, der dazu ausgelegt ist, Steuersignale (US1, US2) in Ansteuersignale (AS1, AS2) umzusetzen, die unmittelbar zum Ansteuern einer Aktuatoranordnung (34, 36) zum Betätigen der Komponente (22, 24) verwendbar sind.

11. Verfahren nach einem der Ansprüche 1 bis 10, wobei die mechanische Vorspannung (30, 32) so eingerichtet ist, dass die passive Zustandsüberführung in den sicheren Zustand innerhalb einer ersten vorgegebenen Zeitspanne (t_{Con-pas}) erfolgt, die kleiner ist als eine Sicherheitszeitspanne (72) abzüglich einer ersten Fehlererkennungszeitspanne (t_{Det-pas}).

12. Verfahren nach einem der Ansprüche 1 bis 11, wobei eine Ansteuerdynamik der Komponente (22, 24) so eingerichtet ist, dass die aktive Zustandsüberführung in den sicheren Zustand innerhalb einer zweiten vorgegebenen Zeitspanne (t_{Con-act}) erfolgt, die kleiner ist als eine Sicherheitszeitspanne (72) abzüglich einer zweiten Fehlererkennungszeitspanne (t_{Det-act}).

13. Verfahren nach einem der Ansprüche 1 bis 12, wobei eine zum Betätigen der Komponente (22, 24) verwendete Aktuatoranordnung (34, 36) einen Elektromotor (38, 42) aufweist.

14. Steuergerät (52) zum Steuern einer Komponente (22, 24) eines Antriebstranges (12) eines Kraftfahrzeuges (10), wobei in dem Steuergerät (52) ein Verfahren (68) nach einem der Ansprüche 1 bis 13 implementiert ist.

## Claims

1. Method (68) for actuating a component (22, 24) of a drive train (12) of a motor vehicle (10), wherein the component (22, 24) is mechanically prestressed into a safe state, having the step:
- sensing (S12) a fault state,
**characterized by** the steps
- sensing (S14) whether the fault state is a first or second type of fault state,
- immediate interruption (S16) of the actuation of the component (22, 24) so that the component (22, 24) is passively transferred into the safe state by the mechanical prestress (30, 32) if the fault state is of the first type of fault state or actuation (S22) of the component (22, 24) in such a way that the component (22, 24) is actively transferred into the safe state if the fault state is of the second type of fault state.

2. Method according to Claim 1, wherein the first type of fault state includes a processor fault of a control device (52).

3. Method according to Claim 1 or 2, wherein the first type of fault state includes an energy supply fault, in which the energy supply for a control device (52) is faulty.

4. Method according to Claim 2 or 3, wherein the first and/or the second type of fault state is sensed by a monitoring device (58) which monitors a processor (54) of a control device (52) and/or an energy supply of the control device (52).

5. Method according to one of Claims 1 to 4, wherein the second type of fault state includes a software fault in a control software section (62).

6. Method according to one of Claims 1 to 5, **characterized in that** the first and/or the second type of fault state is sensed by a safety software section (66).

7. Method according to Claim 5 or 6, wherein the control software section (62) is connected to an output software section (64) which outputs signals (AS1, AS2; SS1', SS2'; SS1") at at least one processor output.

8. Method according to Claim 7, wherein the safety software section (66) is connected to the output software section (64) in order to carry out the active state transfer into the safe state.

9. Method according to Claim 7 or 8, wherein the output control section (64'; 64") outputs control signals (SS1, SS2; SS1") to the at least one processor output, which control signals (SS1, SS2; SS1") are converted by means of actuation hardware (76, 78; 80) into actuation signals (AS1, AS2) for an actuator arrangement (34, 36) for activating the component (22, 24).

10. Method according to one of Claims 1 to 9, wherein an output software section (64) is installed on a processor (54) of a control device (52) for activating a component (22, 24) of a drive train (12), which output software section (64) is configured to convert control signals (US1, US2) into actuation signals (AS1, AS2) which can be used directly to actuate an actuator arrangement (34, 36) for activating the component (22, 24).

11. Method according to one of Claims 1 to 10, wherein the mechanical prestress (30, 32) is configured in such a way that the passive state transfer into the safe state takes place within a first predefined time period (t_{Con-pas}) which is shorter than a safety time period (72) minus a first fault detection time period (t_{Det-pas}).

12. Method according to one of Claims 1 to 11, wherein actuation dynamics of the component (22, 24) are configured in such a way that the active state transfer into the safe state takes place within a second predefined time period (t_{Con-act}) which is shorter than a safety time period (72) minus a second fault detection time period (t_{Det-act}).

13. Method according to one of Claims 1 to 12, wherein an actuator arrangement (34, 36) which is used to activate the component (22, 24) has an electric motor (38, 42).

14. Control device (52) for controlling a component (22, 24) of a drive train (12) of a motor vehicle (10), wherein a method (68) according to one of Claims 1 to 13 is implemented in the control device (52).

## Revendications

1. Procédé (68) de commande d'un élément (22, 24) d'une chaîne cinématique (12) d'un véhicule automobile (10), l'élément (22, 24) étant précontraint de façon mécanique dans un état sûr, avec l'étape suivante :
- détection (S12) d'un état d'anomalie ;
**caractérisé par** les étapes suivantes :
- détection (S14) de si l'état d'anomalie est un premier ou un deuxième type d'anomalie d'état ;
- interruption immédiate (S16) de la commande de l'élément (22, 24), de sorte que l'élément (22, 24) est amené passivement par précontrainte mécanique (30, 32) dans l'état sûr lorsque l'état d'anomalie est du premier type d'anomalie d'état ou commande (S22) de l'élément (22, 24), de telle sorte que l'élément (22, 24) est amené activement dans l'état sûr lorsque l'état d'anomalie est du deuxième type d'anomalie d'état.

2. Procédé selon la revendication 1, le premier type d'anomalie d'état contenant une anomalie de processeur d'un appareil de commande (52).

3. Procédé selon la revendication 1 ou 2, le premier type d'anomalie d'état contenant une anomalie d'alimentation en énergie pour laquelle l'alimentation en énergie d'un appareil de commande (52) est défaillante.

4. Procédé selon la revendication 2 ou 3, le premier et/ou le deuxième type d'anomalie d'état étant déterminés par un dispositif de surveillance (58) surveillant un processeur (54) d'un appareil de commande (52) et/ou une alimentation en énergie de l'appareil de commande (52).

5. Procédé selon l'une quelconque des revendications 1 à 4, le deuxième type d'anomalie d'état contenant une anomalie de logiciel dans une section de logiciel de commande (62).

6. Procédé selon l'une quelconque des revendications 1 à 5, **caractérisé en ce que** le premier et/ou le deuxième type d'anomalie d'état est détecté par une section de logiciel de sécurité (66).

7. Procédé selon la revendication 5 ou 6, la section de logiciel de commande (62) entrant en liaison avec une section de logiciel de sortie (64) envoyant des signaux (AS1, AS2 ; SS1', SS2' ; SS1") à au moins une sortie de processeur.

8. Procédé selon la revendication 7, la section de logiciel de sécurité (66) entrant en liaison avec la section de logiciel de sortie (64) pour mettre en oeuvre une transition d'état actif dans l'état sûr.

9. Procédé selon la revendication 7 ou 8, la section de commande de sortie (64' ; 64") envoyant des signaux de commande (SS1, SS2 ; SS1") à l'au moins une sortie de processeur les transformant en signaux de commande (AS1, AS2) au moyen d'un matériel de commande (76, 78 ; 80) pour un agencement d'actionneur (34, 36) en vue d'actionner l'élément (22, 24).

10. Procédé selon l'une quelconque des revendications 1 à 9, une section de logiciel de sortie (64) étant installée sur un processeur (54) d'un appareil de commande (52) pour l'actionnement d'un élément (22, 24) d'une chaîne cinématique (12), ladite section étant conçue pour transformer les signaux de commande (US1, US2) en signaux de commande (AS1, AS2) directement utilisables pour commander un agencement d'actionneur (34, 36) servant à actionner l'élément (22, 24).

11. Procédé selon l'une quelconque des revendications 1 à 10, la précontrainte (30, 32) mécanique étant conçue de telle sorte que le passage d'état passif dans un état sûr se produit à l'intérieur d'une première période de temps (t_{Con-pas}) prédéfinie inférieure à une période de temps de sécurité (72), déduction faite d'une première période de temps de détection d'anomalie (t_{Det-pas}).

12. Procédé selon l'une quelconque des revendications 1 à 11, une dynamique de commande de l'élément (22, 24) étant conçue de telle sorte que le passage d'état actif dans l'état sûr se produit à l'intérieur d'une deuxième période de temps (t_{Con-act}) prédéfinie inférieure à une période de temps de sécurité (72), déduction faite d'une deuxième période de temps de détection d'anomalie (t_{Det-act}).

13. Procédé selon l'une quelconque des revendications 1 à 12, un agencement d'actionneur (34, 36) servant à l'actionnement de l'élément (22, 24) comportant un moteur électrique (38, 42).

14. Appareil de commande (52) pour commander un élément (22, 24) d'une chaîne d'entraînement (12) d'un véhicule automobile (10), un procédé (68) selon l'une quelconque des revendications 1 à 13 étant mis en oeuvre dans l'appareil de commande (52).
